# EUROPEAN PATENT SPECIFICATION

(11) **EP 3 092 727 B1**
(45) Date of publication and mention of the grant of the patent: **13.04.2022**
(21) Application number: 15733165.3
(22) Date of filing: 06.01.2015
(51) Int. Cl.: H04W 72/04

(54) **APPARATUS TO SUPPORT A FAST TDD CONFIGURATION INDICATION**
VORRICHTUNG ZUR UNTERSTÜTZUNG EINER SCHNELLEN TDD-KONFIGURATIONSANZEIGE
APPAREIL POUR PRENDRE EN CHARGE UNE INDICATION DE CONFIGURATION TDD RAPIDE

(30) Priority: 06.01.2014 US 201461924194 P; 26.09.2014 US 201414498441
(43) Date of publication of application: 16.11.2016
(73) Proprietor: Apple Inc., Cupertino, CA 95014 (US)
(72) Inventor: HE, Hong, Beijing 100190 (CN); HUANG, Rui, Beijing 100085 (CN)
(74) Representative: Rooney, John-Paul
(86) International application number: PCT/US2015/010235
(87) International publication number: WO 2015/103579

(56) References cited:
- WO-A1-2013/170426
- US-A1- 2009 249 153
- SHARP: "Remaining issues for explicit L1 reconfiguration signaling", 3GPP DRAFT; R1-135727, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. San Francisco, USA; 20131111 - 20131115 13 November 2013 (2013-11-13), XP050735378, Retrieved from the Internet: URL:http://www.3gpp.org/ftp/Meetings_3GPP_ SYNC/RAN/RAN1/Docs/ [retrieved on 2013-11-13]
- RENESAS MOBILE EUROPE LTD: "Discussion on Enhancements for Dynamic TDD UL-DL Configuration", 3GPP DRAFT; R1-122363, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Prague, Czech Republic; 20120521 - 20120525, 12 May 2012 (2012-05-12), XP050600626, [retrieved on 2012-05-12]
- SHARP: 'Remaining issues for explicit L1 reconfiguration signaling' , 3GPP TSG RAN WG1 MEETING #75,R1-135727 02 November 2013, SAN FRANCISCO, USA, XP050735378
- ZTE: 'Remaining Details of Signalling for TDD UL-DL Reconfiguration' , 3GPP TSG RAN WG1 MEETING #75,R1-135365 02 November 2013, SAN FRANCISCO, USA, XP050735047
- HUAWEI ET AL.: 'Physical layer signaling design for TDD eIMTA' , 3GPP TSG RAN WG1 MEETING #75,R1-135013 01 November 2013, SAN FRANCISCO, USA, XP050734716
- NTT DOCOMO: 'Some Viewpoints about Reconfiguration Signaling Design' , 3GPP TSG RAN WG1 MEETING #75,R1-135507 02 November 2013, SAN FRANCISCO, USA, XP050735180

## Description

### Technical Field

The present disclosure relates to a device for supporting a fast indication of uplink/downlink configuration of a time-division duplexing system. Document WO 2013/170426 A1 discloses a method for time division duplex uplink-downlink configuration indication. Document SHARP: "Remaining issues for explicit L1 reconfiguration signaling", 3GPP DRAFT; R1-135727, RAN WG1 discloses remaining issues for explicit L1 reconfiguration signaling and RENESAS MOBILE EUROPE LTD: "Discussion on Enhancements for Dynamic TDD UL-DL Configuration", 3GPP DRAFT; Rl-122363, RAN WG1 discloses a discussion on Enhancements for Dynamic TDD UL-DL Configuration.

### Brief Description of the Drawings

Figure 1 is a schematic diagram of a system comprising a plurality of eNBs communicatively coupled with a plurality of UEs.
Figure 2 is a timeline illustrating a schedule for transmitting TDD UL/DL configuration information.
Figure 3 is a schematic diagram of a mapping from subframes to a bitmap.
Figure 4 is a schematic diagram of a mapping from subframes in which TDD UL/DL configuration information was received to radio frames in which the TDD UL/DL configuration is applied.
Figure 5 is a flow diagram of a method for configuring a device using a fast indication of UL/DL configuration.
Figure 6 is a flow diagram of a method for providing a fast indication of UL/DL configuration to a UE.
Figure 7 is a schematic diagram of a UE able to receive a fast indication of TDD UL/DL configuration.

### Detailed Description of Preferred Embodiments

The essential features of the invention are outlined by the appended independent claim.

Wireless mobile communication technology uses various standards and protocols to transmit data between a base station and a wireless communication device. Wireless communication system standards and protocols can include, for example, the 3rd Generation Partnership Project (3GPP) long term evolution (LTE); the Institute of Electrical and Electronics Engineers (IEEE) 802.16 standard, which is commonly known to industry groups as worldwide interoperability for microwave access (WiMAX); and the IEEE 802.11 standard, which is commonly known to industry groups as Wi-Fi. In 3GPP radio access networks (RANs) in LTE systems, a base station may include Evolved Universal Terrestrial Radio Access Network (E-UTRAN) Node Bs (also commonly denoted as evolved Node Bs, enhanced Node Bs, eNodeBs, or eNBs) and/or Radio Network Controllers (RNCs) in an E-UTRAN, which communicate with a wireless communication device, known as user equipment (UE). In LTE networks, an E-UTRAN may include a plurality of eNodeBs and may communicate with a plurality of UEs. An evolved packet core (EPC) may communicatively couple the E-UTRAN to an external network, such as the Internet.

LTE networks include radio access technology and core radio network architecture that provide high data rate, low latency, packet optimization, and improved system capacity and coverage. In LTE networks, an eNB may communicate with one or more UEs. Depending on the activities of the one or more UEs, the eNB may experience different amounts of uplink (UL) and downlink (DL) traffic with different traffic profiles (e.g., bursty, continuous, etc.). For example, the eNB may experience heavy DL traffic, bursty UL traffic, and/or the like. The eNB may select a time division duplexing (TDD) UL/DL configuration based on the amount and profile of traffic experienced by the eNB. The TDD UL/DL configuration may be a predefined and/or predetermined schedule indicating the transmission direction for each subframe in a frame. The predetermined schedules may be configured to handle different kinds of traffic (e.g., LTE may include seven possible configurations, such as a configuration zero optimized for bursty UL traffic and a configuration five optimized for heavy DL traffic). The one or more UEs may experience better performance as a result of the TDD UL/DL configuration being selected based on the current traffic situation. This may be particularly true for UEs communicating with low-power nodes (LPNs), such as pico or femto cells.

The TDD UL/DL configuration may be changed semi-statically (e.g., changed at most once every 640 ms). However, a traffic situation may change more frequently than the updates to the TDD UL/DL configuration. The performance of eNBs, such as LPNs, may be improved by updating the TDD UL/DL configuration more frequently (e.g., updating at most once every 10, 20, 40, or 80 ms or the like). The minimum time between updates may be referred to as the modification period. A UE may indicate to an eNB that it supports more frequent updates (e.g., that the UE supports enhanced mitigation and traffic interference adaptation (eIMTA)). The eNB may transmit an indication of which subframes the UE should monitor for TDD UL/DL configuration information. The UE may transmit the TDD UL/DL configuration information during the indicated subframe. For example, specialized Downlink Control Information (DCI) (e.g., reconfiguration DCI) that indicates the desired configuration may be transmitted. The reconfiguration DCI may be transmitted during the Primary Cell (PCell) Common Search Space (CSS) with a unique eIMTA Radio Network Temporary Identifier (RNTI) to differentiate from existing types of DCI. The UE may determine to which frame the TDD UL/DL configuration should be applied and may apply the TDD UL/DL configuration to the determine frame.

When determining which subframes the UE should monitor and how to signal those subframes to the UE, the effect of long DCI transmission periodicity on discontinuous reception (DRX) by the UE may be balanced against power consumption from blind decoding attempts on candidate subframes. An information element (IE) may be transmitted to the eIMTA capable UEs to indicate potential subframes in which the TDD UL/DL configuration information may be transmitted. The UE may then know where to monitor during DRX Active Time. A bitmap may be transmitted through higher layer signaling (e.g., using a Radio Resource Control (RRC) message). The TDD UL/DL configuration information may be transmitted periodically. The TDD UL/DL configuration information may be transmitted only on System Information Block 1 (SIB1) DL subframes or special subframes to prevent false detections. The UE may assume that all transmissions of the TDD UL/DL configuration information within a same modification period are identical. The UE may not attempt to decode the TDD UL/DL configuration information again in a modification period after it has been successfully decoded a first time. The starting position and/or duration of the modification period may be indicated by higher layer signaling indicative of predefined values.

Each DL subframe or special subframe in a current TDD UL/DL configuration may correspond to an element of the bitmap. Thus, the length of the bitmap may be L=M^{∗}T/10, where L is the length, M is the number of DL and special subframes per frame under the current TDD UL/DL configuration, and T is the modification period in milliseconds. The division by ten may convert from milliseconds to number of frames for embodiments with ten millisecond frames; equations for frames with other lengths will be apparent to those of skill in the art. Each bit in the bitmap may indicate whether the corresponding subframe should be monitored. For example, a "1" may indicate that it should be monitored and a "0" may indicate that it should not be monitored. Table 1 lists bitmap lengths for different TDD UL/DL configurations and modification periods:

**Table 1 - Bitmap Lengths for Various TDD UL/DL Configurations**

| **SIB1 TDD** **UL/DL** | | **UL/DL Reconfiguration Periodicity (T)** | | |
|---|---|---|---|---|
| **Configuration** | **10 ms** | **20 ms** | **40 ms** | **80 ms** |
| 0 | 4 | 8 | 16 | 32 |
| 1 | 6 | 12 | 24 | 48 |
| 2 | 8 | 16 | 32 | 64 |
| 3 | 7 | 14 | 28 | 56 |
| 4 | 8 | 16 | 32 | 64 |
| 5 | 9 | 18 | 36 | 72 |
| 6 | 5 | 10 | 20 | 40 |

The length of the bitmap as well as the meaning of individual bits may change based on which TDD UL/DL configuration is currently being applied. As a result, an IE containing an updated bitmap may need to be transmitted each time the TDD UL/DL configuration changes. In some instances, the subframes to be monitored may not change despite a change in the TDD UL/DL configuration. In an embodiment, the UE may continue to monitor the previously specified subframes despite a change in TDD UL/DL configuration if an updated bitmap is not received. Alternatively, or in addition, the bitmap length may be selected to correspond to the TDD UL/DL configuration having the largest number of DL and special subframes (e.g., configuration five in Table 1). There may be a one-toone mapping between bits in the bitmap and the subframes other than subframes always used for uploading (e.g., all subframes other than subframe two in an embodiment). The eNB may only need to transmit an indication of the length of the modification period and a correspondingly sized bitmap when signaling which subframes to monitor. The eNB may transmit an updated bitmap if a change in TDD UL/DL configuration resulted in a subframe being monitored becoming an UL subframe, and/or the UE may be responsible for determining which subframes are UL subframes and not monitoring those subframes regardless of the bitmap.

The length of the bitmap may instead be selected based on the length of the TDD UL/DL configuration having the smallest number of DL and special subframes (e.g., configuration zero in the embodiment of Table 1). The UE may only need to monitor subframes that are DL or special subframes under all possible TDD UL/DL configurations (e.g., subframes zero, one, five, and six in an embodiment). Accordingly, the length of the bitmap may depend only on the length of the modification period, and the UE may not be responsible for determining which subframes are UL subframes that should not be monitored. Moreover, the signaling overhead may be substantially reduced; UE complexity may be reduced; and the probability of a false detection of the reconfiguration DCI may be potentially lower due to monitoring fewer subframes in each modification period.

The length of the bitmap may be further reduced by restricting TDD UL/DL configuration information to only being transmitted during certain frames. The TDD UL/DL configuration information may be transmitted only during the last one or two frames in each modification period. For example, a modification period with a duration equal to one frame may allow modification during that frame whereas modification periods with durations equal to two, four, and/or eight frames may allow modification during the last two frames of the modification period. Alternatively, or in addition, modification periods of any duration may be restricted to the last frame of the modification period. The eNB may only need to transmit an indication of the length of the modification period and a bitmap sized based on the number of frames to be monitored when signaling which subframes to monitor. Table 2 lists bitmap lengths for different modification periods:

**Table 2 - Bitmap Lengths**

| | **UL/DL Reconfiguration Periodicity (T)** | | | |
|---|---|---|---|---|
| | **10 ms** | **20 ms** | **40 ms** | **80 ms** |
| Use Largest Number of Sub frame s Use Smallest | 9 | 18 | 36 | 72 |
| Number of Sub frame s Restrict to | 4 | 8 | 16 | 32 |
| Certain Frames | 4 | 4/8 | 4/8 | 4/8 |

The transmission of the TDD UL/DL configuration information may be evenly distributed across modification period. The even distribution may reduce the latency for acquiring the latest TDD UL/DL configuration information (e.g., for DRX UEs that wake up between transmissions of the TDD UL/DL configuration information), which may otherwise be quite large for longer modification periods. To evenly distribute the transmissions, the subframes used for transmitting the TDD UL/DL configuration information may be evenly spaced over a plurality subframes within a modification period. For example, the same subframe may be used in every radio frame. A bitmap may be used to indicate the subframe according to any of the previously discussed methods, but the length of the bitmap may not need to be increased for modification periods including multiple radio frames. For example, if transmission of the TDD UL/DL configuration information is restricted to subframes that are DL or special subframes under all possible TDD UL/DL configurations, the length of the bitmap may be equal to the number of DL and special subframes in a TDD UL/DL configuration having the smallest number of DL and special subframes.

Alternatively, a code may be used to specify which subframes will contain the TDD UL/DL configuration information. For example, each possible value of the code may correspond to a single subframe in which the TDD UL/DL configuration information. If only one subframe per modification period is used to transmit the TDD UL/DL configuration information and/or a same subframe is used in each frame, then only a single code may be needed to identify the subframe. The code may be a binary code, and the length of the code may be approximately the logarithm base two of the number of possible DL and special subframes. In an example where the TDD UL/DL configuration information is restricted to four possible subframes, the code may only be two bits long (e.g., 00 for subframe zero, 01 for subframe one, 10 for subframe five, and 11 for subframe six).

When the UE receives the reconfiguration DCI specifying the TDD UL/DL configuration, the UE may apply the detected UL/DL configuration to a frame determined based on the subframe in which the TDD UL/DL configuration information was received. In an embodiment, the TDD UL/DL configuration may be applied to a current frame when the TDD UL/DL configuration information is detected in a first subframe (e.g., subframe zero) of the current frame, for example, to allow for enhanced physical downlink control channel (ePDCCH) monitoring and/or channel state information (CSI) feedback. The TDD UL/DL configuration may be applied in a frame differing from the current frame by a predetermined offset when the TDD UL/DL configuration information is detected in a subframe other than the first subframe. For example, the offset may be one (e.g., the TDD UL/DL configuration is applied in a next frame), two, three, four, etc. The offset may not depend on the modification period. Alternatively, or in addition, the TDD UL/DL configuration may be applied in a next modification period when the TDD UL/DL configuration information is detected in a subframe other than the first subframe.

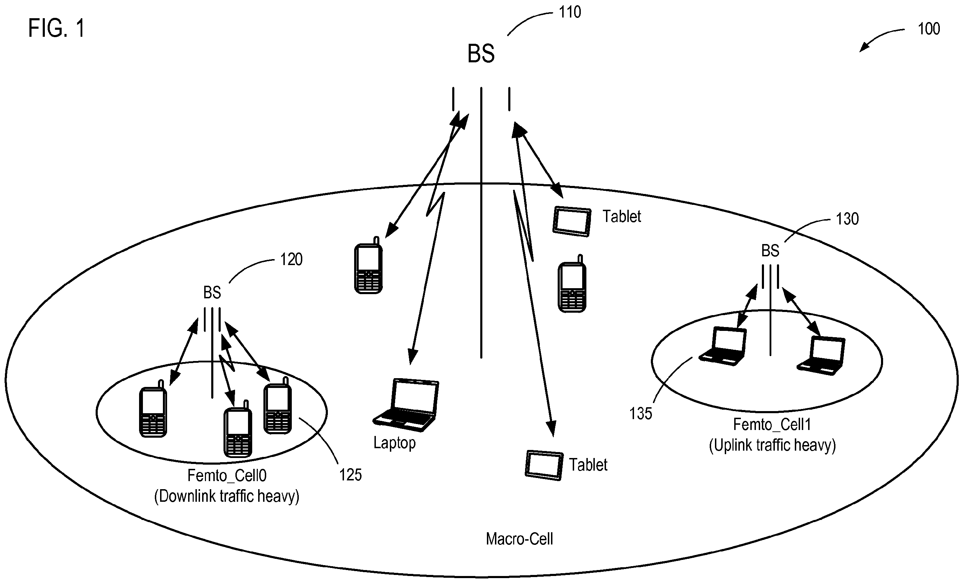

Figure 1 is a schematic diagram of a system 100 comprising a plurality of eNBs 110, 120, 130 communicatively coupled with a plurality of UEs 125, 135. The plurality of eNBs may include a macro cell 110 and a plurality of femto cells 120, 130 within a coverage area of the macro cell 110. The plurality of UEs 125, 135 smart phones, tablets, laptops, modems coupled to laptops or personal computers, and/or the like. The femto cells 120, 130 may experience different kinds of traffic. For example, a first femto cell 120 may be coupled to a plurality of smart phones 125 and may experience heavy downlink traffic. A second femto cell 130 may be coupled to a plurality of laptops 135 and may experience heavy uplink traffic. Accordingly, the first femto cell 120 may apply a TDD UL/DL configuration that can accommodate heavy DL traffic, and the second femto cell 130 may apply a TDD UL/DL configuration that can accommodate heavy UL traffic.

Because of the small coverage area of the femto cells 120, 130, the UEs connected to each femto cell 120, 130 may change quickly as may the type of traffic. The performance experienced by the UEs 125, 135 may be improved by modifying the TDD UL/DL configuration quickly to accommodate the changing traffic. One or more of the eNBs 110, 120, 130 may update TDD UL/DL configuration information up to once per modification period. The modification period may be shortened relative to a semi-static update period. For example, the modification period may be 10 ms, 20 ms, 40 ms, 80 ms, and/or the like. The one or more of the eNBs 110, 120, 130 may inform the plurality of UEs 125, 135 of the modification period and when to monitor for updated TDD UL/DL configuration information. The eNBs 110, 120, 130 may transmit the TDD UL/DL configuration information to the plurality of UEs 125, 135 at the times to be monitored. The eNBs 110, 120, 130 and/or the UEs 125, 135 may apply the updated TDD UL/DL configuration. The eNBs 110, 120, 130 and/or the UEs 125, 135 may be configured to determine how long after transmission of the TDD UL/DL configuration information to apply the TDD UL/DL configuration so that it is applied simultaneous by all necessary entities.

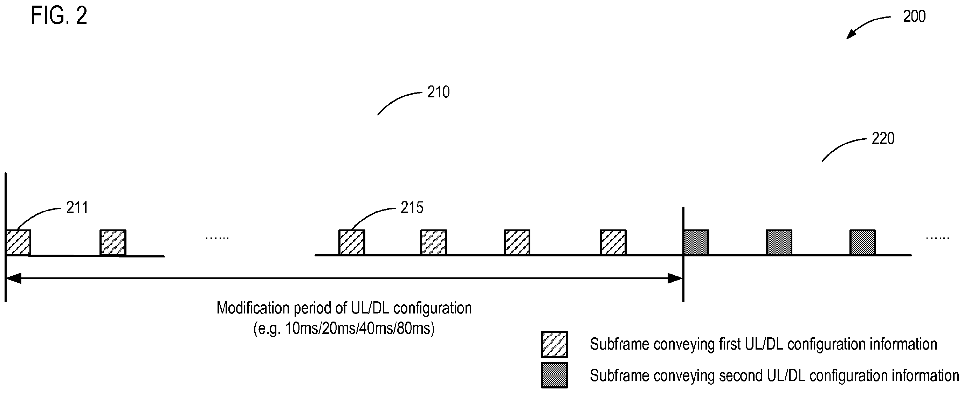

Figure 2 is a timeline 200 illustrating a schedule for transmitting TDD UL/DL configuration information. The timeline 200 includes consecutive modification period 210, 220 in which the TDD UL/DL configuration information is transmitted. Each modification period 210, 220 may include different TDD UL/DL configuration information but does not necessarily need to do so. A first modification period 210 may include a plurality of subframes 211, 215 in which the TDD UL/DL configuration information is transmitted. Each subframe 211, 215 within the same modification period 210 may include identical TDD UL/DL configuration information. Accordingly, once a UE has decoded TDD UL/DL configuration information from at least one subframe 211, 215 in a modification period 210, 220, it may not need to monitor or decode any other subframes 211, 215 in the modification period 210, 220. The modification periods 210, 220 may include the plurality of subframes 211, 215 with TDD UL/DL configuration information and the plurality of subframes 211, 215 may be approximately evenly spaced so that UEs waking up and/or entering the coverage range of an eNB can spend less time performing DRX.

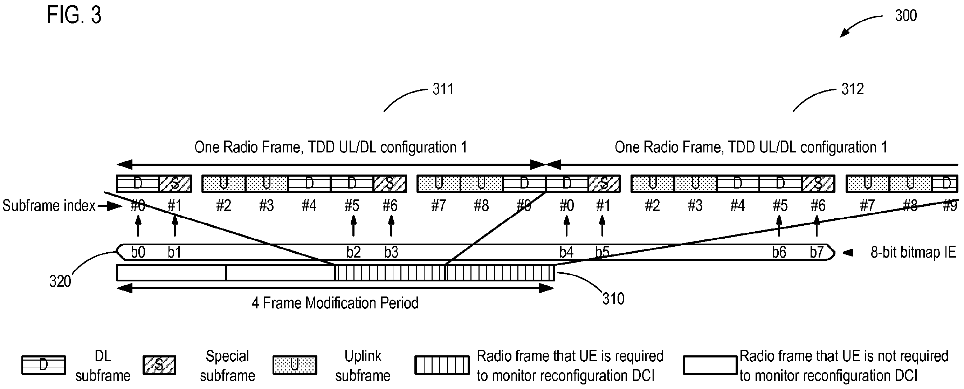

Figure 3 is a schematic diagram of a mapping 300 from subframes to a bitmap 320. In the illustrated example, only four subframes per frame 311, 312 may be represented by the bitmap 320 even though there may be additional DL subframes. The four subframes may be subframes that are downlink or special subframes in every possible TDD UL/DL configuration. Thus, the bitmap 320 may not need to change in length or be retransmitted when the TDD UL/DL configuration changes, and a UE may not need to determine whether elements of the bitmap 320 are valid (e.g., whether elements correspond to DL or special subframes). The illustrated modification period 310 may have a duration of four frames.

To reduce the size of the bitmap 320, the TDD UL/DL configuration information may be transmitted during only two of the frames 311, 312 in the modification period 310. As a result, the bitmap 320 may not need to include elements corresponding to subframes in the first two frames, and the bitmap 320 may be shorter than it otherwise would be. The illustrated bitmap 320 only includes eight elements to represent the subframes in which the TDD UL/DL configuration information might be sent despite additional subframes and/or frames being available for transmitting the TDD UL/DL configuration information. In alternate examples, the bitmap 320 may include an element for each DL or special subframe in the current configuration, an element for each DL or special subframe in a configuration having a largest number of DL and special subframes, elements for more or fewer frames, and/or the like. In another example, a code, such as a three bit code, may be used rather than the bitmap 320.

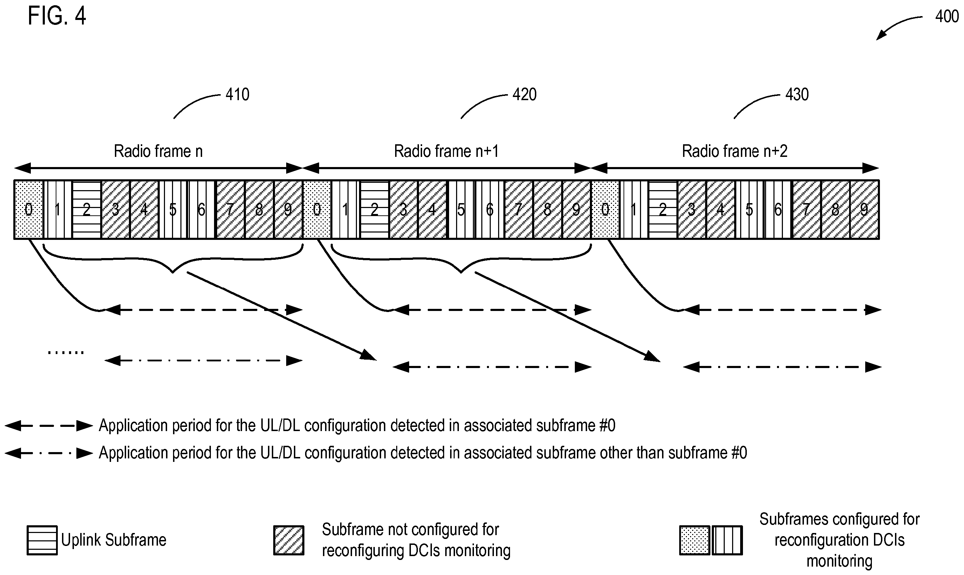

Figure 4 is a schematic diagram of a mapping 400 from subframes in which TDD UL/DL configuration information was received to radio frames 410, 420, 430 in which the TDD UL/DL configuration is applied. When the TDD UL/DL configuration information is received in a first subframe (e.g., subframe zero), the TDD UL/DL configuration may be applied in the same radio frame 410, 420, 430. For example, a reconfiguration DCI may be received in a first subframe of a first frame 410. The TDD UL/DL configuration from the reconfiguration DCI may be applied to the first frame 410. The first three subframes (e.g., subframes zero, one, and two) may be identical under all configurations, so the UE may have until the fourth subframe (e.g., subframe three) to apply the configuration in the same frame.

When the TDD UL/DL configuration information is received in the first frame 410 in a subframe other than the first subframe, the TDD UL/DL configuration may be applied in a frame 420, 430 offset by a predetermined number of frames. The offset may be one (e.g., a next frame 420), two, three, four frames, or the like. The UE may have until the fourth subframe of the offset frame 420, 430 to apply the TDD UL/DL configuration, which may be ample time for doing so. When the TDD UL/DL configuration information is received in a subframe other than the first subframe, the TDD UL/DL configuration may be applied in a first frame of a next modification period. Accordingly, the delay may vary depending on the frame in which the TDD UL/DL configuration information is received.

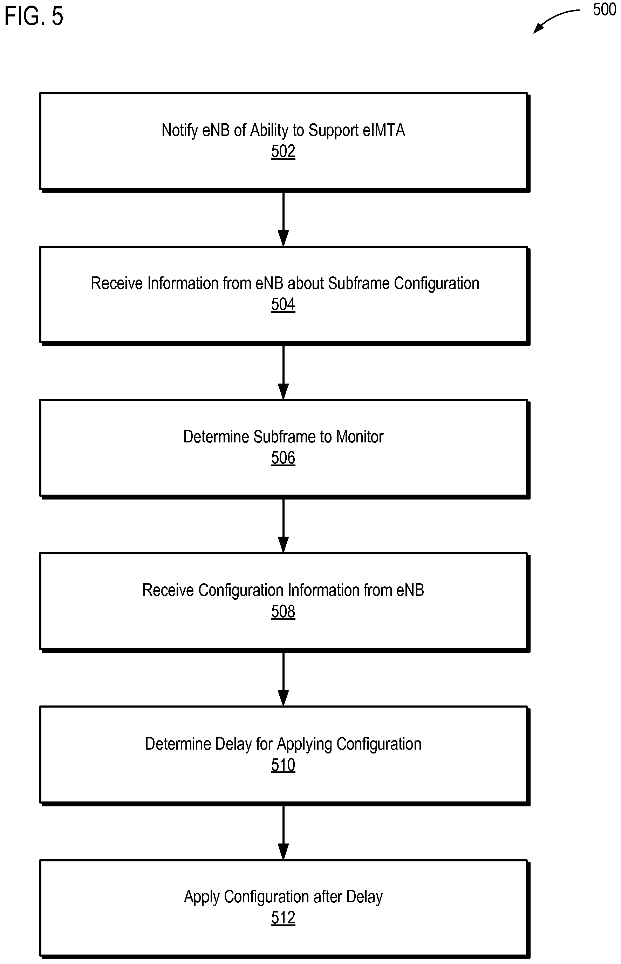

Figure 5 is a flow diagram of a method 500 for configuring a device using a fast indication of UL/DL configuration. The method 500 may begin by notifying 502 an eNB of the ability to support eIMTA. In response, indications about which subframes to monitor for the TDD UL/DL configuration information may be received 504 from the eNB. The indications may be received as one or more IEs that are included in reconfiguration DCI. The indications may include a bitmap such as one of the bitmap configurations previously discussed. Alternatively, or in addition, the indications may include a code (e.g., a code with fewer than one bit per possible subframe). The reconfiguration DCI may also include an indication of the length of the modification period.

One or more subframes to be monitored may be determined 506 from the indications. Each subframe indicated by the eNB may be monitored until TDD UL/DL configuration information is received for the current modification period. Alternatively, or in addition, fewer than all subframes indicated by the eNB may be monitored, such as if some of the subframes indicated are UL subframes. The determined subframes may be monitored, and TDD UL/DL configuration information may be received 508 from the eNB. The TDD UL/DL configuration information may include an indication of the TDD UL/DL configuration that should be applied. For example, the TDD UL/DL configurations may be predefined and/or predetermined, and the TDD UL/DL configuration information may include an indication of which predefined and/or predetermined TDD UL/DL configuration should be applied.

A delay before the TDD UL/DL configuration is applied may be determined 510. The delay may be determined 510 based on the subframe in which the TDD UL/DL configuration information is received. The delay may be different for TDD UL/DL configuration information received in a first subframe versus other subframes. The TDD UL/DL configuration may be applied to a current frame when the TDD UL/DL configuration information is received in the first subframe and applied in a frame or modification period with a predetermined offset when the TDD UL/DL configuration information is received in the a subframe other than the first subframe. The TDD UL/DL configuration may be applied 512 such that it is active after the determined delay has elapsed. Data may then be exchanged with the eNB according to the TDD UL/DL configuration. Additional TDD UL/DL configuration information and/or indications about which subframe to monitor may be received 508, 504 with each new modification period and/or each time the eNB updates the TDD UL/DL configuration information and/or the indications about which subframe to monitor.

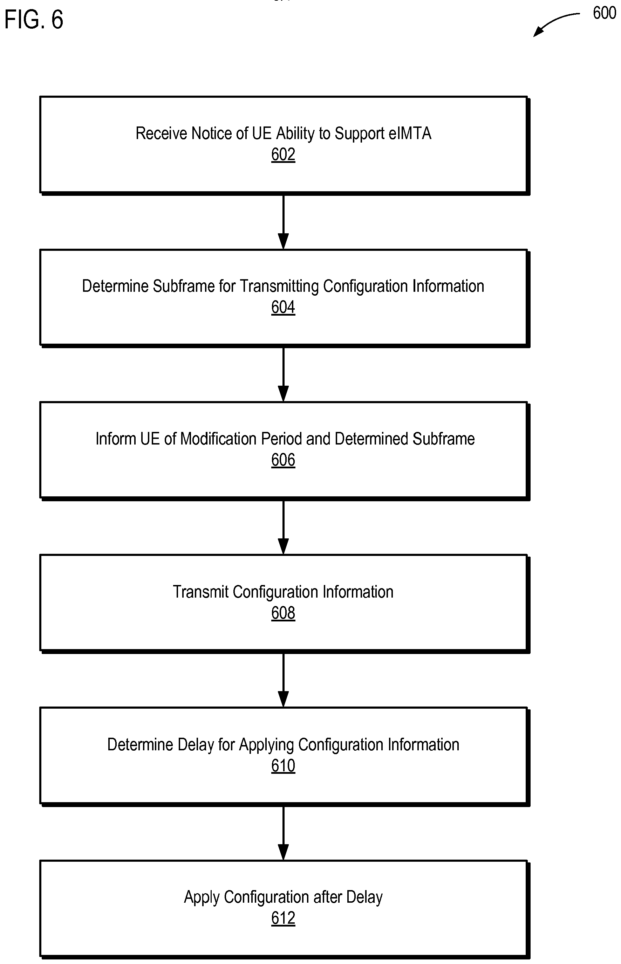

Figure 6 is a flow diagram of a method 600 for providing a fast indication of UL/DL configuration to a UE. The method 600 may begin by receiving 602 notice of the ability of the UE to support eIMTA. In response, one or more subframes may be determined 604 for transmitting the TDD UL/DL configuration information. The subframes may be determined 604 based on a current TDD UL/DL configuration, based on a modification period, based on anticipated behavior (e.g., connections, wake-ups, etc.) from one or more UEs, and/or the like. The subframes may be selected so that a latency between subframes is small. Alternatively, or in addition, a modification period may be determined.

The UE may be informed 606 of the modification period and/or the one or more determined subframes. The modification period may be selected from a predefined and/or predetermined set of modification periods. The UE may be informed 606 which of the predefined and/or predetermined modification periods was selected. The UE may be informed 606 of the one or more determined subframes using a bitmap, one or more codes, and/or the like. For example, a bitmap and/or code according to a previously discussed configuration may be transmitted to the UE. The bitmap and/or code may be transmitted as an IE included in reconfiguration DCI. The format of the IE may be predefined and/or previously or concurrently transmitted to the UE. TDD UL/DL configuration information may be transmitted 608 in the one or more determined subframes.

A delay for applying the TDD UL/DL configuration information may be determined 610 so that the TDD UL/DL configuration is not applied until the UE is ready to do so. If the TDD UL/DL configuration information is transmitted in a first subframe of the current frame, it may be assumed that the UE will expect the TDD UL/DL configuration to be applied to the current frame. If the TDD UL/DL configuration information is transmitted in a subframe of the current frame other than the first subframe, it may be assumed that the UE will apply the TDD UL/DL configuration to a frame or modification period offset from the current frame. The offset may be predefined and/or predetermined, and/or it may have been previously or concurrently transmitted. The TDD UL/DL configuration information may be applied 612 so that it is effective after the determined delay has passed. The method 600 may continue to transmit 608 the TDD UL/DL configuration information with each new modification period and/or each time the TDD UL/DL configuration needs to be changed. The method may also, or instead, return to determining 604 the subframe for transmitting if the subframe needs to be changed.

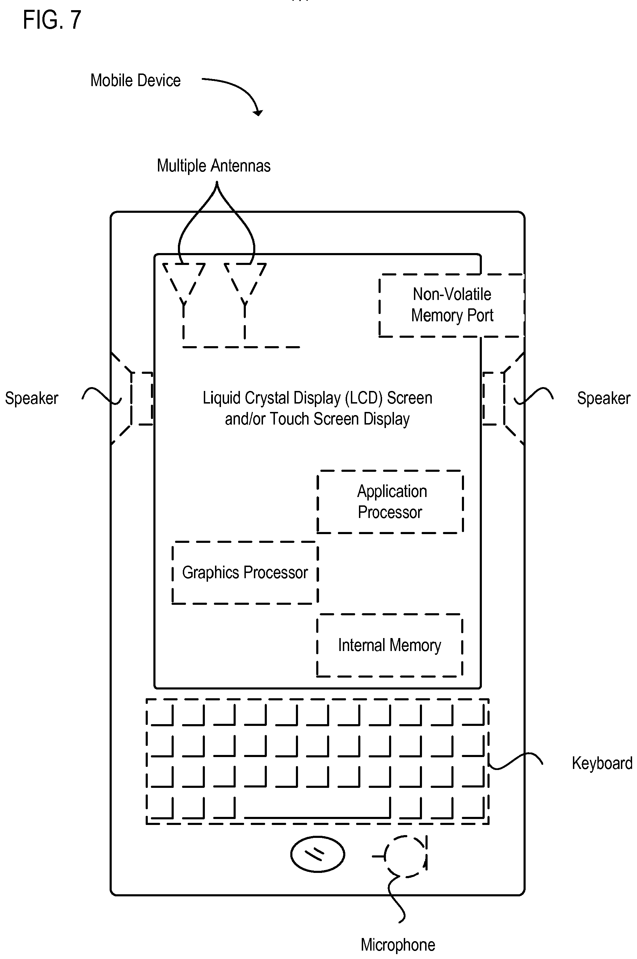

Figure 7 is an example illustration of a mobile device, such as a UE, a mobile station (MS), a mobile wireless device, a mobile communication device, a tablet, a handset, or another type of wireless communication device. The mobile device can include one or more antennas configured to communicate with a transmission station, such as a base station (BS), an eNB, a base band unit (BBU), a remote radio head (RRH), a remote radio equipment (RRE), a relay station (RS), a radio equipment (RE), or another type of wireless wide area network (WWAN) access point. The mobile device can be configured to communicate using at least one wireless communication standard, including 3GPP LTE, WiMAX, high speed packet access (HSPA), Bluetooth, and Wi-Fi. The mobile device can communicate using separate antennas for each wireless communication standard or shared antennas for multiple wireless communication standards. The mobile device can communicate in a wireless local area network (WLAN), a wireless personal area network (WPAN), and/or a WWAN.

Figure 7 also provides an illustration of a microphone and one or more speakers that can be used for audio input and output from the mobile device. The display screen may be a liquid crystal display (LCD) screen or other type of display screen, such as an organic light emitting diode (OLED) display. The display screen can be configured as a touch screen. The touch screen may use capacitive, resistive, or another type of touch screen technology. An application processor and a graphics processor can be coupled to internal memory to provide processing and display capabilities. A non-volatile memory port can also be used to provide data input/output options to a user. The non-volatile memory port may also be used to expand the memory capabilities of the mobile device. A keyboard may be integrated with the mobile device or wirelessly connected to the mobile device to provide additional user input. A virtual keyboard may also be provided using the touch screen.

Various techniques, or certain aspects or portions thereof, may take the form of program code (i.e., instructions) embodied in tangible media, such as floppy diskettes, CD-ROMs, hard drives, a non-transitory computer readable storage medium, or any other machine-readable storage medium, wherein, when the program code is loaded into and executed by a machine, such as a computer, the machine becomes an apparatus for practicing the various techniques. In the case of program code execution on programmable computers, the computing device may include a processor, a storage medium readable by the processor (including volatile and non-volatile memory and/or storage elements), at least one input device, and at least one output device. The volatile and non-volatile memory and/or storage elements may be a RAM, an EPROM, a flash drive, an optical drive, a magnetic hard drive, or another medium for storing electronic data. The eNB (or other base station) and UE (or other mobile station) may also include a transceiver component, a counter component, a processing component, and/or a clock component or timer component. One or more programs that may implement or utilize the various techniques described herein may use an application programming interface (API), reusable controls, and the like. Such programs may be implemented in a high-level procedural or an object-oriented programming language to communicate with a computer system. However, the program(s) may be implemented in assembly or machine language, if desired. In any case, the language may be a compiled or interpreted language, and combined with hardware implementations.

It should be understood that many of the functional units described in this specification may be implemented as one or more components, which is a term used to more particularly emphasize their implementation independence. For example, a component may be implemented as a hardware circuit comprising custom very large scale integration (VLSI) circuits or gate arrays, off-the-shelf semiconductors such as logic chips, transistors, or other discrete components. A component may also be implemented in programmable hardware devices such as field programmable gate arrays, programmable array logic, programmable logic devices, or the like.

Components may also be implemented in software for execution by various types of processors. An identified component of executable code may, for instance, comprise one or more physical or logical blocks of computer instructions, which may, for instance, be organized as an object, a procedure, or a function. Nevertheless, the executables of an identified component need not be physically located together, but may comprise disparate instructions stored in different locations that, when joined logically together, comprise the component and achieve the stated purpose for the component.

Indeed, a component of executable code may be a single instruction, or many instructions, and may even be distributed over several different code segments, among different programs, and across several memory devices. Similarly, operational data may be identified and illustrated herein within components, and may be embodied in any suitable form and organized within any suitable type of data structure. The operational data may be collected as a single data set, or may be distributed over different locations including over different storage devices, and may exist, at least partially, merely as electronic signals on a system or network. The components may be passive or active, including agents operable to perform desired functions.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on its presentation in a common group without indications to the contrary. In addition, various embodiments and examples of the present disclosure may be referred to herein along with alternatives for the various components thereof. It is understood that such embodiments, examples, and alternatives are not to be construed as de facto equivalents of one another, but are to be considered as separate and autonomous representations of the present disclosure.

Although the foregoing has been described in some detail for purposes of clarity, it will be apparent that certain changes and modifications may be made without departing from the principles thereof. It should be noted that there are many alternative ways of implementing both the processes and apparatuses described herein. Accordingly, the present embodiments are to be considered illustrative and not restrictive, and the disclosure is not to be limited to the details given herein, but may be modified within the scope of the appended claims.

The scope of the present application should be determined only by the following claims.

## Claims

1. An apparatus for a User Equipment, UE, configured to communicate with an evolved universal terrestrial radio access network, E-UTRAN, to receive a schedule for uplink/downlink, UL/DL, communications, the apparatus comprising:
circuitry configured to:
detect downlink control information, DCI, transmitted with an enhanced interference mitigation and traffic adaptation, eIMTA, Radio Network Temporary Identifier, RNTI, from an E-UTRAN Node B, eNB, wherein the DCI indicates that an UL/DL configuration information is being signaled, and
decode the UL/DL configuration information; and
the apparatus is **characterised by** further comprising a processor configured to:
determine a subframe number of a subframe in which the UL/DL configuration information was received,
determine a delay for applying the UL/DL configuration based on the subframe number of the subframe in which the UL/DL configuration information was received, and
apply the UL/DL configuration after the delay has elapsed.

2. The apparatus of claim 1, wherein the processor is configured to apply the UL/DL configuration to a current frame when the UL/DL configuration information is received in subframe 0 of the current frame.

3. The apparatus of claim 1, wherein the processor is configured to apply the UL/DL configuration to a frame differing from a current frame by a predetermined offset when the UL/DL configuration information is received in a subframe other than subframe 0 of the current frame.

4. The apparatus of claim 3, wherein the processor is configured to apply the UL/DL configuration to a next frame after the current frame when the UL/DL configuration information is received in the subframe other than subframe 0 of the current frame.

5. The apparatus of any of claims 1-4, wherein the processor is configured to assume that additional UL/DL configuration information detected in a same reconfiguration period as the received UL/DL configuration information are identical to the received UL/DL configuration information.

6. The apparatus of any of claims 1-5, wherein a reconfiguration periodicity for updates to the UL/DL configuration information is 10 milliseconds.

## Patentansprüche

1. Vorrichtung für ein Benutzergerät, UE, das konfiguriert ist, um mit einem Evolved Universal Terrestrial Radio Access Network, E-UTRAN, zu kommunizieren, um einen Zeitplan für Uplink/Downlink-, UL/DL-, Kommunikationen zu empfangen, die Vorrichtung umfassend:
Schaltung, die konfiguriert ist zum:
Erkennen von Downlink-Steuerinformation, DCI, die mit einem Enhanced Interference Mitigation and Traffic Adaptation, eIMTA, Radio Network Temporary Identifier, RNTI, von einem E-UTRAN Node B, eNB, übertragen wird, wobei die DCI anzeigt, dass eine UL/DL-Konfigurationsinformation signalisiert wird, und
Decodieren der UL/DL-Konfigurationsinformation; und
wobei die Vorrichtung **dadurch gekennzeichnet ist, dass** sie ferner einen Prozessor umfasst, der konfiguriert ist zum:
Bestimmen einer Subrahmennummer eines Subrahmens, in dem die UL/DL-Konfigurationsinformation empfangen wurde,
Bestimmen einer Verzögerung zum Anwenden der UL/DL-Konfiguration basierend auf der Subrahmennummer des Subrahmens, in dem die UL/DL-Konfigurationsinformation empfangen wurde, und
Anwenden der UL/DL-Konfiguration, nachdem die Verzögerung verstrichen ist.

2. Vorrichtung nach Anspruch 1, wobei der Prozessor konfiguriert ist, um die UL/DL-Konfiguration auf einen aktuellen Rahmen anzuwenden, wenn die UL/DL-Konfigurationsinformation im Subrahmen o des aktuellen Rahmens empfangen wird.

3. Vorrichtung nach Anspruch 1, wobei der Prozessor konfiguriert ist, um die UL/DL-Konfiguration auf einen Rahmen anzuwenden, der sich von einem aktuellen Rahmen um einen vorbestimmten Versatz unterscheidet, wenn die UL/DL-Konfigurationsinformation in einem anderen Subrahmen als dem Subrahmen o des aktuellen Rahmens empfangen wird.

4. Vorrichtung nach Anspruch 3, wobei der Prozessor konfiguriert ist, um die UL/DL-Konfiguration auf einen nächsten Rahmen nach dem aktuellen Rahmen anzuwenden, wenn die UL/DL-Konfigurationsinformation im anderen Subrahmen als dem Subrahmen o des aktuellen Rahmens empfangen wird.

5. Vorrichtung nach einem der Ansprüche 1 bis 4, wobei der Prozessor konfiguriert ist, um anzunehmen, dass zusätzliche UL/DL-Konfigurationsinformation, die in einer gleichen Rekonfigurationsperiode wie die empfangene UL/DL-Konfigurationsinformation detektiert wird, identisch mit der empfangenen UL/DL-Konfigurationsinformation ist.

6. Vorrichtung nach einem der Ansprüche 1 bis 5, wobei eine Rekonfigurationsperiodizität für Aktualisierungen der UL/DL-Konfigurationsinformation 10 Millisekunden beträgt.

## Revendications

1. Un appareil destiné à un équipement utilisateur, UE, configuré pour communiquer avec un réseau d'accès radio terrestre universel amélioré, E-UTRAN, pour recevoir une planification pour des communications de liaison montante/liaison descendante, UL/DL, l'appareil comprenant :
une circuiterie configurée pour :
déterminer une information de contrôle de liaison descendante, DCI, transmise avec un identifiant temporaire de réseau radio, RNTI, à adaptation au trafic et compensation des interférences améliorées, eIMTA, en provenance d'un nœud B, eNB, E-UTRAN, la DCI indiquant qu'une information de configuration UL/DL est en cours de signalement, et
décoder l'information de configuration UL/DL ; et
l'appareil étant **caractérisé en ce qu'**il comprend en outre un processeur configuré pour :
déterminer un numéro de sous-trame d'une sous-trame dans laquelle a été reçue l'information de configuration UL/DL,
déterminer un retard pour l'application de la configuration UL/DL sur la base du numéro de sous-trame de la sous-trame dans laquelle a été reçue l'information de configuration UL/DL, et
appliquer la configuration UL/DL après écoulement du retard.

2. L'appareil de la revendication 1, dans lequel le processeur est configuré pour appliquer la configuration UL/DL à une trame courante lorsque l'information de configuration UL/DL est reçue dans la sous-trame 0 de la trame courante.

3. L'appareil de la revendication 1, dans lequel le processeur est configuré pour appliquer la configuration UL/DL à une trame qui diffère d'une trame courante d'un décalage prédéterminé lorsque l'information de configuration UL/DL est reçue dans une sous-trame autre que la sous-trame 0 de la trame courante.

4. L'appareil de la revendication 3, dans lequel le processeur est configuré pour appliquer la configuration UL/DL à une trame suivante après la trame courante lorsque l'information de configuration UL/DL est reçue dans la sous-trame autre que la sous-trame 0 de la trame courante.

5. L'appareil de l'une des revendications 1 à 4, dans lequel le processeur est configuré pour supposer que l'information de configuration UL/DL additionnelle détectée dans une même période de reconfiguration que l'information de configuration UL/DL reçue est identique à l'information de configuration UL/DL reçue.

6. L'appareil de l'une des revendications 1 à 5, dans lequel une périodicité de reconfiguration pour les mises à jour de l'information de configuration UL/DL est de 10 millisecondes.
